# EUROPEAN PATENT SPECIFICATION

(11) **EP 0 467 511 B1**
(45) Date of publication and mention of the grant of the patent: **08.11.1995**
(21) Application number: 91304377.4
(22) Date of filing: 15.05.1991
(51) Int. Cl.: G11B 5/596, G11B 5/55

(54) **Apparatus for centering a transducer over a track on a magnetic disk in a disk drive system**
Gerät zum Zentrieren eines Wandlers über einer Spur einer Magnetplatte in einem Speicherplattensystem
Appareil pour centrer un transducteur sur la piste d'un disque magnétique pour système de disque

(30) Priority: 18.07.1990 US 555078
(43) Date of publication of application: 22.01.1992
(73) Proprietor: SEAGATE TECHNOLOGY INTERNATIONAL, Georgetown Grand Cayman Island (KY)
(72) Inventor: Jorgenson, David J., St. Louis Park, Minnesota 55416 (US)
(74) Representative: Sturt, Clifford Mark

(56) References cited:
- EP-A- 0 368 268
- EP-A- 0 412 221
- US-A- 4 814 908
- PATENT ABSTRACTS OF JAPAN vol. 13, no. 460 (P-946) 18 October 1989

## Description

The present invention relates to apparatus for centering a transducer over a track on a magnetic disk in a disk drive system.

In disk drive systems, there is typically a stack of disks, which are spaced apart and mounted on a spindle. Data heads, which carry transducers that read and write information on the disks, are attached to arms which extend between the disks so that the data heads fly over the disks. The arms are attached to an actuator which is moved to position the data heads over data tracks on the disks. If the data heads are to read and write information on the disk reliably, the transducers must be centered over the data tracks. Therefore, a closed loop feed back system is desirable for positioning the data heads over the tracks.

One method of positioning the data heads in the disk drive system over the tracks on the disk, which uses a closed loop feed back circuit, is called the dedicated servo method. In the dedicated servo method, one data head and one disk in the disk drive system are dedicated to the task of acquiring position information. The dedicated data head is referred to as the servo head and the dedicated disk is referred to as the servo disk. The servo head is connected to a designated servo arm, which is coupled to the same actuator as the other arms. The servo head is held over the centre of a desired track on the servo disk by a closed loop servo system which utilises feed back from specially written data on the servo disk to position the actuator properly. Since the other arms are rigidly attached to the actuator, they follow the servo arm and are positioned over the desired tracks on their respective disks.

Although the servo head is in the closed loop feed back system with the servo disk, the other data heads and other disks in the disk drive do not have the benefit of a separate closed loop feed back system to ensure they are properly positioned. Thus, in order to function properly, the other disks and heads must maintain their original position with respect to the servo head and the servo disk over extended periods of time. Maintaining this position is often difficult because of shifts in the relative head position due to temperature extremes and mechanical wear. If all the data heads, arms and disks do not maintain their positions relative to the servo head and the servo disk, off track errors will result. Off track errors reduce read margins and may cause data errors.

Two methods for correcting the problem of position shifting due to temperature extremes and mechanical wear are disclosed in U.S. Application No. 937,270 filed on 3rd December 1986 and entitled "Apparatus and method for positioning and maintaining a magnetic recording transducer over the centre of a track in a disk", and in European Application No. 89312299.4 entitled "Apparatus for centering a transducer over a track of a magnetic disk". In these two applications, either one or two heating elements, such as resistors, are embedded in each of the arms. When power is applied to the resistors, heat is generated. That heat causes expansion of the material in the arm, thereby bending the arm to move the head in an arcuate path, which is substantially transverse to the tracks on the disk. A feed back loop is constructed around the head in which a parameter of the read back signal is compared to a desired value to form an error term. The error term is then used to set the power level which is applied to the heating elements. In this way, the position of each arm is independently controlled.

While these systems have significant advantages, they also have short comings. First, as disk drive capacities increase, more disks are expected to fit in the stack of disks mounted on the spindle. But, as the disk drive package sizes decrease, components within the disk drive must also get smaller. Because of these two factors, it is becoming necessary for data arms to be made thinner. As the thickness of the data arms decreases, it is more difficult to provide a resistor small enough to fit in the reduced space in the data arm, yet large enough to create the thermal energy required to bend the arm and re-position the transducer.

Another disadvantage of the previous systems is the power required for their implementation. The amount of current required to heat the arm enough to cause desired re-positioning can be significant.

It is an object of the present invention, at least in its preferred form, to provide apparatus for centering a transducer over a track on a magnetic disk, which avoids these problems by avoiding the need for applying thermal energy directly to data arms in the disk drive system.

According to the present invention, there is provided apparatus for centering a transducer over a track on a magnetic disk in a disk drive system, comprising an arm having a first end portion mountable on an actuator for rotating the arm and a second end portion for supporting a slider carrying the transducer, and characterised by shape memory alloy means coupled to the arm, and means for selectively heating the shape memory alloy means, the shape memory alloy means being deformed in response to the heat and being arranged to cause the arm to deflect so as to move the slider along an arcuate path in a plane substantially transverse to the track.

The invention is described further, by way of example, with reference to the accompanying drawings, in which:-
Figure 1 is a top view of an arm positioned over a magnetic disk showing a first embodiment of centering apparatus in accordance with the present invention;
Figure 1A is a greatly enlarged fragmentary side view of the arm showing the shape memory alloy means of the present invention;
Figure 2 is an enlarged diagram of the arm shown in Figure 1;
Figure 2A is a greatly enlarged portion of the arm showing another form of the shape memory alloy means and the connection of such means with the arm;
Figure 3 shows the arm of Figure 1 in a block diagram of a feed back loop;
Figure 4 is a block diagram of the feed back loop adapted for use with a plurality of arms;
Figure 5 shows a second embodiment of the centering apparatus of the present invention;
Figure 6 is a side view of a pair of flexures shown in Figure 5;
Figure 7 shows another embodiment of the centering apparatus of the present invention; and
Figure 8 shows another embodiment of the centering apparatus of the present invention.

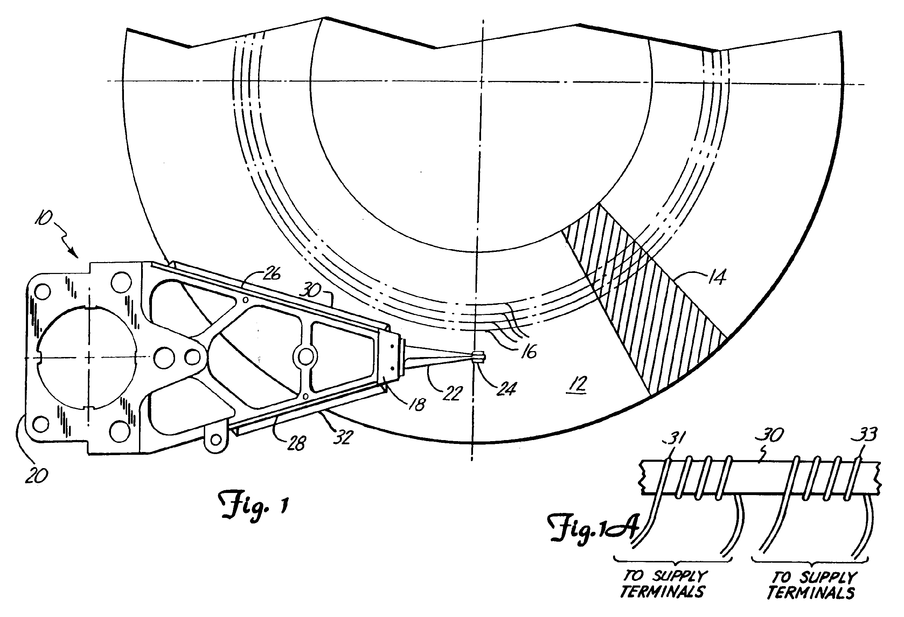

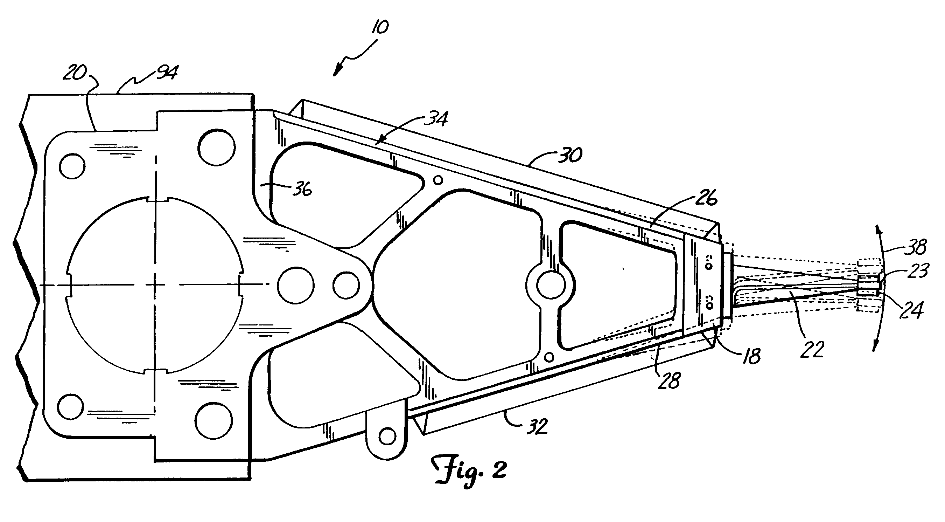

Figure 1 shows one embodiment of the present invention. A thermally compensated arm 10 is shown positioned over a magnetic disk 12. The magnetic disk 12 includes a plurality of zones, including a position information zone 14. Also, the magnetic disk 12 includes a plurality of tracks 16.

The arm 10 has a free end 18 and an attached end 20. A flexure 22 is attached to the free end 18, and supports a slider carrying a transducer 24. The attached end 20 of the arm 10 is attached to an actuator (not shown), which pivots the arm 10 to move the transducer 24 from track to track on the magnetic disk 12.

The arm 10 also includes a first side 26 and a second side 28. A first shape memory alloy wire (SMA wire) 30 and a second SMA wire 32 are shown attached to the first side 26 and the second side 28, respectively, of the arm 10. The SMA wires 30 and 32 are typically 50% titanium and 50% nickel and have a nominal diameter of 0.008 inches (0.2 mm). When the SMA wires 30 and 32 are heated, they change shape by contracting in length in response to the heat. When the SMA wires 30 and 32 cool, they return to their original shapes.

Therefore, when the SMA wire 30 is heated, it contracts as a function of the co-efficient of linear expansion for the particular material which is used to form the SMA wire 30. This contraction causes the arm 10 to bend or deflect. Consequently, the transducer 24 moves in a direction across the particular track 16 which it is positioned over. When the SMA wire 30 cools, it expands back to its original length and the transducer 24 moves across the particular track 16 in the opposite direction.

Similarly, when the SMA wire 32 heats up, it contracts in length as a function of the co-efficient of linear expansion for the particular material which is used to form the SMA wire 32. This contraction causes the arm 10 to bend or deflect. Consequently, the transducer 24 moves in a direction across the particular track 16 over which it is postioned. When the SMA wire 32 cools, it expands back to its original length and the transducer 24 moves across the track in the opposite direction. The range of movement described above (which is typically in terms of micro-inches or micrometres) and the particular direction of movement depends on the geometry and material make up of the arm 10. the material from which the SMA wires 30 and 32 are made and the temperature rise or drop in the SMA wires 30 and 32.

The SMA wires 30 and 32 can be heated in a variety of ways, including applying power directly to the SMA wire, thereby generating heat, or using an external heater such as a wire wrapped heating element, an etched process heater or a conductive polymer. Applying power directly to the SMA wire takes less power than using an external heating element and is. therefore. a preferred embodiment. However, another means for heating the SMA wires 30 and 32 is shown in Figure 1A. Figure 1A shows a greatly enlarged portion of the SMA wire 30 wrapped with two wire wrapped heating elements 31 and 33. The wire wrapped heating elements 31 and 33 are typically very thin strands of wire, electrically isolated from the SMA wire 30 with polyimide insulation.

In another embodiment, the elements 31 and 33 are coiled strands of wire located near, but electrically isolated from, the SMA wire 30. In this preferred embodiment, Kapton is used to provide the electrical isolation.

When power is applied directly to the SMS wire 30, the ends of the SMA wire 30 are coupled to a heating element power supply, which is discussed in greater detail later. When the heating elements 31 and 33 are used, the ends of the heating elements 31 and 33 are coupled to the heating element power supply. In either case, as the power supply supplies power to the SMA wire 30 or the heating elements 31 and 33, heat is generated and thermal energy is applied to the SMA wire 30 causing the desired contraction of the SMA wire 30. When power is removed, the SMA wire 30 cools and returns to its original length.

Although heating the SMA wire 30 can be done with only one continuous heating element, a plurality of heating elements may be desirable. By providing a plurality of heating elements around the SMA wire 30, it is possible to heat up only isolated portions of the SMA wire 30 in order to cause different levels of contraction in the SMA wire 30. By selectively controlling a plurality of heating elements (such as the heating elements 31 and 33), the amount of linear contraction of the SMA wire 30 and hence the amount of movement of the transducer 24 can be tightly controlled.

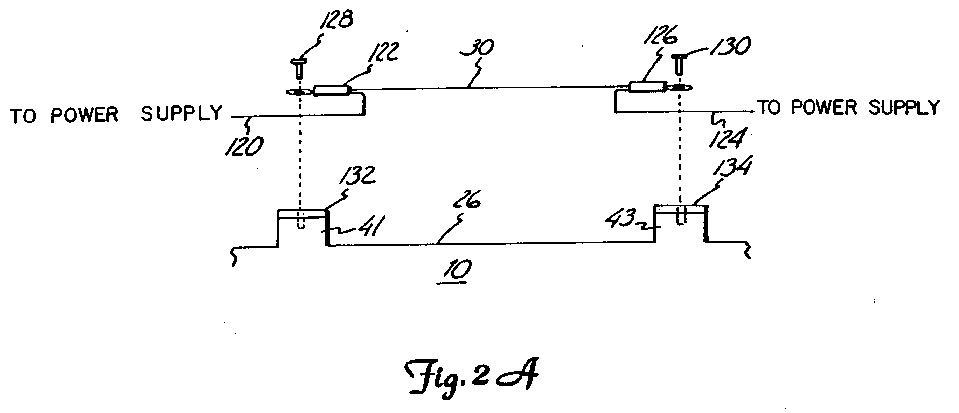

Figure 2 illustrates the motion of the arm 10 during operation. In the illustrated embodiment, the arm 10 is shown essentially as a triangle 34 having a fixed base 36 and two legs. When the SMA wire 30 is heated, it contracts causing the arm 10 to deflect or bend. The resulting motion of the transducer 24, which is attached to the flexure 22 by a slider 23, is essentially along an arc 38.

Similarly, as the SMA wire 32 is heated, it contracts, resulting in movement of the transducer 24 along the arc 38 caused by deflection or bending of the arm 10. The nominal position (the position of the transducer 24 when neither the SMA wire 30 nor the SMA wire 32 is heated) is shown in solid lines in Figure 2. Two additional positions of the arm 10 are shown in dashed lines. The amount of actual movement is very slight and the two additional positions are greatly exaggerated in order to illustrate the motion. Furthermore, in order to keep Figure 2 from becoming cluttered, dashed lines are shown only along the free end 18 of the arm 10. It is worth noting that, since the degree of desired movement of the transducer 24 along the arc 38 is generally very slight, the SMA wires 30 and 32 may only need to be a fraction of an inch (or fraction of a centimetre) in total length. However, for the sake of clarity, they are shown running virtually the entire length of the arm 10 and the movement of the transducer 24 is greatly exaggerated.

Figure 2A is an enlarged view of a portion of the side 26 of the SMA wire 30. The SMA wires 30 and 32 can be mechanically coupled to the arm 10 in a variety of ways. Figure 2A shows one preferred embodiment. In Figure 2A, mechanical mounting posts 41 and 43 are formed integrally with the side 26 of the arm 10. During assembly, a first end of the SMA wire 30 is crimped to a first power supply wire 120 within a crimp connector 122. A second end of the SMA wire 30 is crimped to a second power supply wire 124 within a crimp connector 126. The SMA wire 30 makes electrical contact with power supply wires 120 and 124 in crimp connectors 122 and 126, respectively.

The crimp connectors 122 and 126 are mechanically coupled to mounting posts 41 and 43 by screws 128 and 130. The crimp connectors 122 and 126 electrically isolate the SMA wire from the arm 10. Alternatively, the SMA wire 30 can be electrically isolated from the arm 10 by using screws 128 and 130 formed of non-conductive material, and insulator pads 132 and 134 mounted between the crimp connectors and the arm 10. This same mounting arrangement can be accomplished with the SMA wire 32.

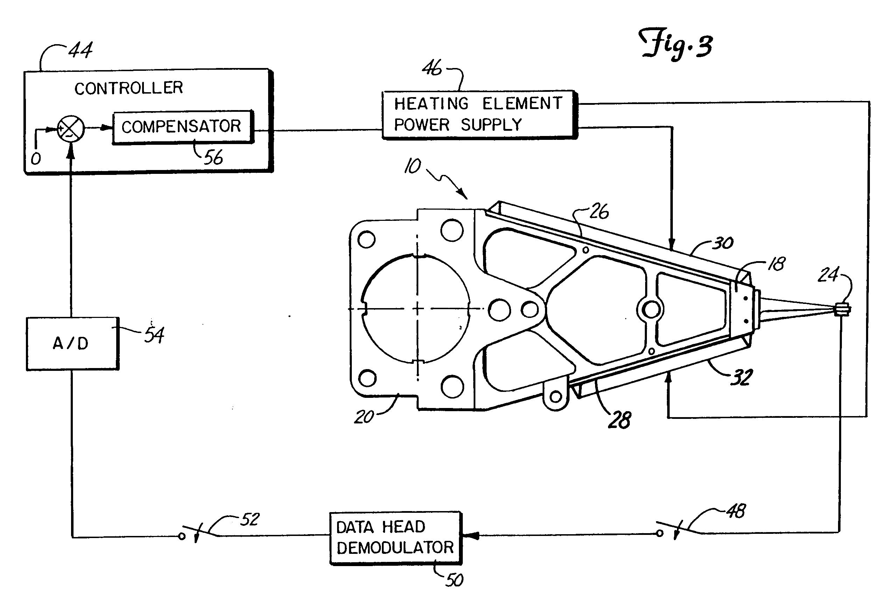

Figure 3 shows the arm 10 as used in a feed back control circuit. The feed back control circuit includes a controller 44, a heating element power supply 46, an arm or head selector 48, a data head modulator 50 and a switch 52. The feed back control circuit operates to centre the transducer 24 over the particular track 16 on the magnetic disk 12 over which it is travelling.

With each revolution of the magnetic disk 12 (shown in Figure 1), the transducer 24 passes over the position information zone 14. Information is written in the position information zone 14 such that, when it is decoded, it provides a voltage which is proportional to the distance that the transducer 24 has moved from the centre of the track 16. Therefore, with each revolution of the magnetic disk 12, a small burst of position information is read from the magnetic disk 12.

Often, the arm 10 is part of a large disk drive system including a plurality of arms. Therefore, the arm (or head) selector 48 selects one of a plurality of arms to be re-positioned. When the arm 10 is selected, the position information read from the magnetic disks 12 by the transducer 24 is supplied to the data head demodulator 50. The data head demodulator 50 decodes the position information retrieved from the magnetic disk 12 and provides an analog voltage which is proportional to the distance that the transducer 24 has moved from the centre of the track 16. When the analog switch 52 is closed, the analog voltage provided by the data head demodulator 50 is provided to an analog to digital (A/D) converter 54. The A/D converter 54, in turn, provides a digital signal to the controller 44 which is representative of the analog voltage provided by the data head demodulator 50.

If the transducer 24 were tracking directly over the centre of the track 16, the digital signal provided by the A/D converter 54 would be zero and no position correction would be required. However, if the controller 44 determines that the digital signal provided by the A/D converter 54 is non-zero, then the controller 44 must determine a correction value. To determine the correction value, the controller 44 performs compensation calculations for a compensator 56 which outputs the correction value based on those calculations. The parameters of the compensator 56 are chosen to compensate the digital signal provided by the A/D converter 54 so that the control circuit has a desired response. In one preferred embodiment, the compensator 56 is a digital filter. The controller 44 performs digital filter calculations for the digital filter thereby determining the correction value.

In the preferred embodiment shown, the correction value is a voltage which is supplied to the heating element power supply 46. The heating element power supply 46 is capable of controlling power supplied to the SMA wires 30 and 32 independently, or alternatively the heating elements used to heat the SMA wires 30 and 32 (such as the heating elements 31 and 33 shown in Figure 1A) independently, to produce an amount of heat which corresponds to the desired correction value. The power supply 46 generates a number of watts which corresponds to the correction value provided by the controller 44. The SMA wires 30 and 32, or the heating elements corresponding to the SMA wires 30 and 32, convert the power supplied to them into heat, thereby heating and causing contraction of the SMA wires 30 or 32, respectively. Therefore, the correction value, which is provided to the heating element power supply 46 in volts, is converted to micro-inches (or micrometers) of movement through the interaction of the heating element power supply 46, the heat generated in the SMA wires 30 and 32 (or the heating elements corresponding to the SMA wires 30 and 32) and the contraction force generated by the SMA wires 30 and 32 upon being heated.

Also, since the heating element power supply 46 is capable of controlling contraction of the SMA wires 30 and 32 independently, power will normally be supplied to heat only one SMA wire, 30 or 32, to correct the position of the arm 10. In other words, power will be supplied to heat the SMA wire 30 for correction in one direction, and power will be supplied to heat the SMA wire 32 for correction in the opposite direction. Moreover, when no correction is required, there will be no power supplied to heat the SMA wire 30 or the SMA wire 32.

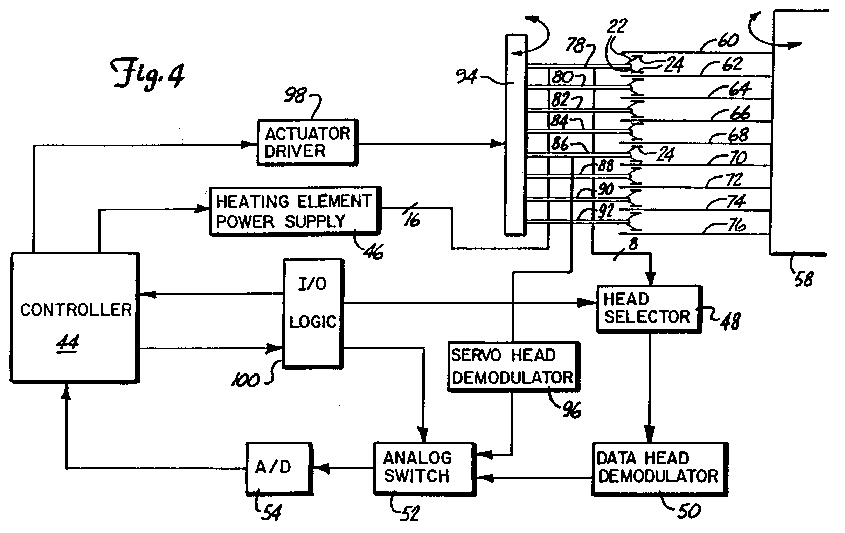

Figure 4 is a block diagram of a control circuit for controlling arm position in a disk drive system with a plurality of disks and a plurality of arms. The disk drive system include a spindle 58, which supports the plurality of disks 60, 62, 64, 66, 68, 70, 72, 74 and 76 (collectively referred to as the disks 60 to 76). The disks 60 to 76 are mounted for rotation with the spindle 58. The disk drive system also includes a plurality of arms 78, 80, 82, 84, 86, 88, 90 and 92 (collectively referred to as the arms 78 to 92), which are of substantially the same construction as the arm 10 shown in Figures 1 to 3. Each of the arms 78 to 92 is provided with a pair of flexures 22 and a pair of transducers 24 (with the exception of the arm 86 which has only one flexure 22 and one transducer 24). The transducers fly over surfaces on the disks 60 to 76. In addition. the arms 78 to 92 are mounted to an actuator 94 which operates to pivot the arms 78 to 92 from track to track on the disks 60 to 76.

The control circuit includes the controller 44, the heating element power supply 46, the head selector 48, the data head demodulator 50, the analog switch 52, the A/D converter 54, a servo head demodulator 96, an actuator driver 98 and input/output (I/O) logic 100.

In the illustrated embodiment, the arm 86 serves as a servo arm, and the transducer associated with the arm 86 reads servo head position information from the servo disk 68. The servo head position information is provided to the servo head demodulator 96, which decodes the position information and provides an analog voltage indicating the position of the servo arm 86 to the analog switch 52. At regular intervals, the controller 44 provides a signal to the I/O logic 100 causing the analog switch 52 to pass the analog voltage provided by the servo head demodulator 96 to the A/D converter 54. The A/D converter 54 provides a digital signal to the controller 44, which represents the analog voltage provided by the servo head demodulator 96. Based on this digital signal, the controller 44 calculates a correction value and provides it to the actuator driver 98. The actuator driver 98, in turn, causes the actuator 94 to rotate in response to the correction value to maintain the transducer 24 on the servo arm 86 over the centre of the particular track 16 over which it is travelling.

At one point during each revolution of the spindle 58, a signal from the servo head demodulator 96 indicates that the data head position zone 14 on the disks 60 to 66 and 70 to 76 is about to pass the transducer 24 on the arms 78 to 84 and 88 to 92. At that point, the I/O logic 100 switches the head selector 48 to read position information from a desired arm 78 to 84 or 88 to 92. The data head demodulator, as discussed above, decodes the information provided by the selected arm into a voltage proportional to the distance that the transducer 24 on the selected arm has moved from the centre of the track 16. The controller 44 samples this decoded information by causing the I/O logic 100 to switch the analog switch 52 so that it passes the signal provided by the data head demodulator 50. After the information is converted to a digital value by the A/D converter 54, the controller 44 performs digital filter computations and determines the correction value for the selected arm.

The correction value is provided to the heating element power supply 46 which supplies enough power to produce an amount of heat necessary to cause contraction in the desired SMA wire corresponding to the selected arm. This contraction, in turn, causes movement of the transducer 24 on the selected arm in an amount which corresponds to the desired correction value.

On the next revolution of the spindle 58, the I/O logic 100 causes the head selector 48 to choose a different arm for correction. The position of the transducer on the selected arm is sampled by the controller 44 and corrected through the heating element power supply 46. Similarly, on each subsequent revolution of the spindle 58, the head selector 48 chooses another arm for correction. Once all the arms have been sampled and corrected, the sequence of selection by the head selector 48 is repeated. This results in a constant sample rate for each of the arms.

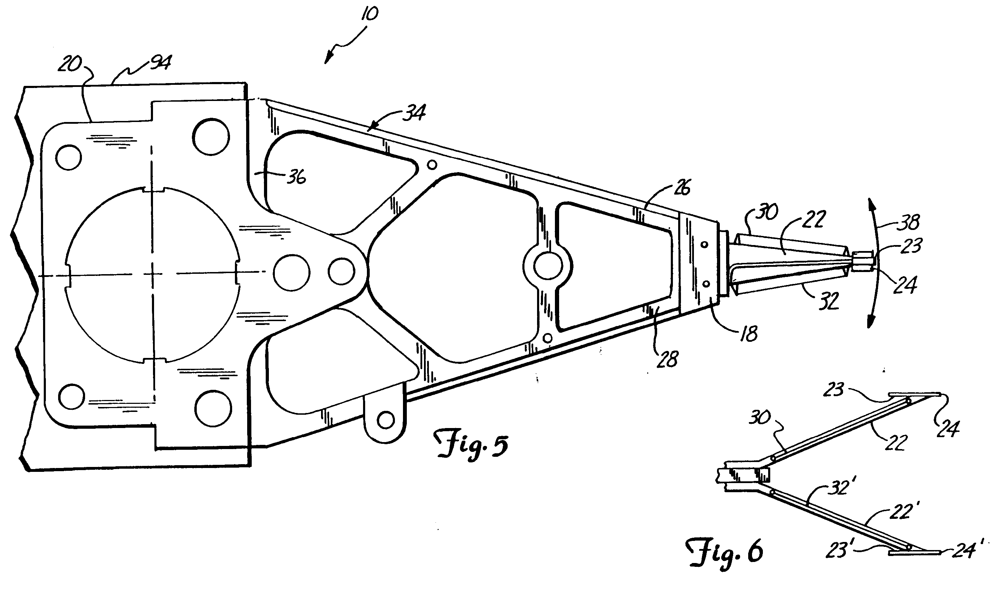

Figure 5 shows another preferred embodiment of the re-positioning apparatus of the present invention. The arm 10 shown in Figure 5 is similar to that shown in Figure 2 and is correspondingly numbered. The only difference is that the SMA wires 30 and 32 are no longer mounted to the sides 26 and 28 of the arm 10. Rather, they are mounted to the opposing sides of the flexure 22. This embodiment has distinct advantages. As discussed with respect to Figure 4, and as shown in Figure 6, it is very common for each arm to be mounted to a pair of flexures 22 and 22′, each flexure 22 and 22′ being coupled to a transducer 24 or 24′ via sliders 23 or 23′. If the SMA wires 30 and 32 were coupled to the sides 26 and 28 of the arm 10, the re-positioning achieved by heating either the SMA wire 30 or 32 would re-position both of the transducers 24 and 24′ with respect to their corresponding tracks 16.

In actuality, however, only one transducer 24 or 24′ on each arm may require correction. With the embodiment shown in Figure 5, each of the individual flexures 22 and 22′ have a set of SMA wires 30 and 32, or 30′ and 32′, respectively. Therefore, by controlling heating of the SMA wires 30 and 32, as well as the SMA wires 30′ and 32′ independently, re-positioning of the transducers 24 and 24′ is independently controlled. This allows greater tracking accuracy of the transducers within the disk drive system.

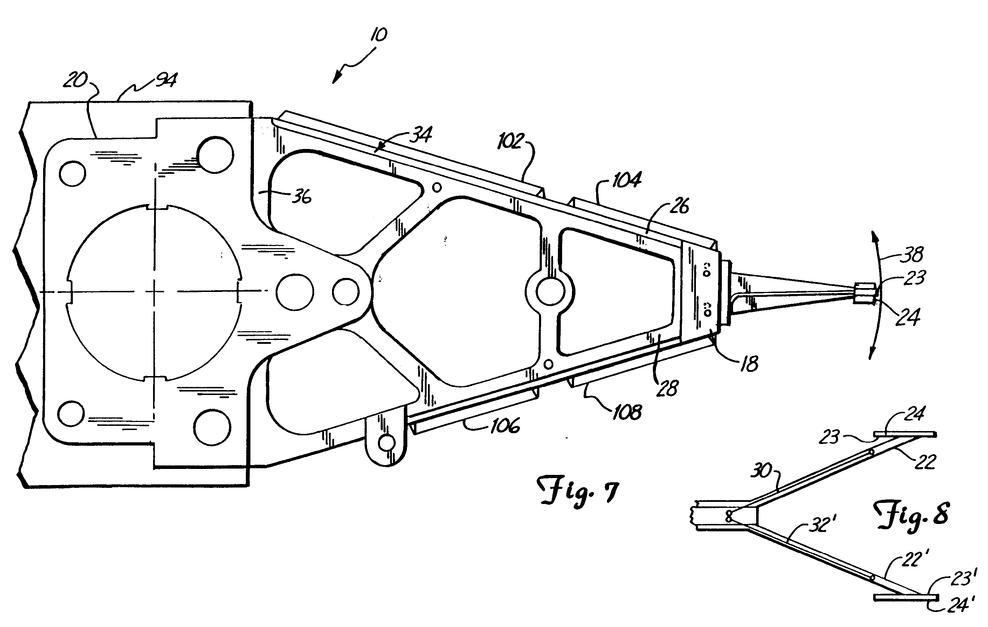

Figure 7 shows yet another preferred embodiment of re-positioning apparatus of the present invention. The arm 10 shown in Figure 7 is similar to those shown in Figures 2 and 5 and is correspondingly numbered. However, rather than having only a single SMA wire attached to each side 26 and 28 of the arm 10, the embodiment shown in Figure 7 provides a plurality of SMA wires attached to the side 26 of the arm 10, as well as a plurality of SMA wires attached to the side 28 of the arm 10.

SMA wires 102 and 104 are each attached to the side 26 of the arm 10. The heating of the SMA wires 102 and 104 is independently controlled. Therefore, the amount of deflection or bending of the arm 10 can be controlled in a stepwise fashion. For example, to achieve the greatest degree of bending, both the SMA wires 102 and 104 are heated. Alternatively, where less bending is required, either the SMA wire 102 or the SMA wire 104 is heated. Also, the SMA wire 104 can be made significantly shorter than the SMA wire 102. Hence, coarse and fine positioning could be accomplished by independently controlling application of thermal energy to the SMA wires 102 and 104.

Similarly, SMA wires 106 and 108 are both attached to the side 28 of the arm 10. The SMA wires 106 and 108 can be independently controlled in the same manner as the SMA wires 102 and 104 thereby controlling deflection of the arm 10 in a stepwise manner. By providing a plurality of SMA wires on the sides 26 and 28 of the arm 10, movement of the transducer 24 along the arc 38 is more tightly controllable than if only a single SMA wire is provided on each side 26 and 28 of the arm 10. This allows greater accuracy when repositioning the transducer 24 within a track 16 on the magnetic disk 12.

An additional embodiment of the present invention is shown in Figure 8. This is very similar to that shown in Figures 5 and 6. The only difference is that the SM A wires 30, 32, 30′ and 32′ are coupled at one end to flexures 22 and 22′ and at the other end to the arm 10. With this embodiment, as with the embodiment described with reference to Figures 5 and 6, micro-positioning of the transducers 24 and 24′ is independently controllable.

The present invention provides the advantages of thermally controlled micro-positioning of transducers in a disk drive system without the requirement for applying thermal energy directly to the data arm itself. Rather, thermal energy is applied to a shape memory alloy attached to the arm. Causing deformation of the shape memory alloy requires less thermal energy than causing thermal expansion within the arm itself. Therefore, repositioning can be accomplished by using a smaller heating element, or by eliminating the heating element and applying power directly to the shape memory alloy. This allows micro-positioning of individual data arms, and in several embodiments, of individual transducers in disk drive systems while still allowing the disk drive package sizes to decrease and while still accommodating for decreases in the thickness of the arms within the disk drive system.

## Claims

1. Apparatus for centering a transducer over a track on a magnetic disk in a disk drive system, comprising an arm (10) having a first end portion (20) mountable on an actuator for rotating the arm and a second end portion (18) for supporting a slider carrying the transducer (24), and characterised by shape memory alloy means (30, 32) coupled to the arm, and means (31, 33) for selectively heating the shape memory alloy means, the shape memory alloy means being deformed in response to the heat and being arranged to cause the arm to deflect so as to move the slider along an arcuate path in a plane substantially transverse to the track.

2. Apparatus according to claim 1 characterised in that the shape memory alloy means comprises at least one first shape memory alloy element (30) coupled to a side of the arm, deformation of the at least one first shape memory alloy element causing the second end portion of the arm to move along the arcuate path in a first direction, and at least one second shape memory alloy element (32) coupled to an opposite side of the arm, deformation of the at least one second shape memory alloy element causing the second end portion of the arm to move along the arcuate path in a second direction generally opposite the first direction.

3. Apparatus according to claim 2 characterised by mechanical coupling means (43, 44) coupling each of the shape memory alloy elements to the arm such that at least a portion of the respective shape memory alloy element is spaced apart from the arm.

4. Apparatus according to claim 1, 2 or 3 characterised in that the means for selectively heating comprises a power supply (46) coupled to the shape memory alloy means, and means (44) for controlling the power supplied to the shape memory alloy means.

5. Apparatus according to claim 1, 2 or 3 characterised in that the means for selectively heating comprises a plurality of resistive heating elements (31, 33) in thermal contact with the shape memory alloy means, a power supply (46) coupled to the resistive heating elements, and means (44) for controlling the power supplied to each of the resistive heating elements.

6. Apparatus according to any of claims 1 to 5 characterised in that the arm comprises a data arm portion, and a flexure (22) coupled to the data arm portion for supporting the slider, and in that the memory alloy means is coupled to the flexure.

7. Apparatus according to claim 6 characterised by a further flexure (22′) coupled to the data arm portion for supporting a further slider, and by further shape memory alloy means (30′, 32′) coupled to the further flexure.

8. Apparatus according to claim 6 or 7 characterised in that the or each shape memory alloy means is coupled at a first end to the data arm portion and at a second end to the or a respective flexure.

9. Apparatus according to any of claims 1 to 8 further characterised by position indicating means (50) responsive to position data recorded on the magnetic disk for providing a position signal indicating when the transducer is tracking off centre, and heat control means (44, 46) for selectively controlling the amount of heat applied to the shape memory alloy means as a function of the position signal.

10. Apparatus according to claim 9 characterised in that the heat control means comprises compensation means (56) for compensating the position signal to provide a compensated position signal, correction means (44) for determining a correction value based on the compensated position signal,. wherein the correction value represents the distance that the transducer is from the centre of the track, and a power supply (46) arranged to vary power delivered to the means for selectively heating as a function of the correction value.

11. Apparatus for centering a transducer over a track of magnetic disk in a disk drive system as claimed in claim 1 characterised in that shape memory alloy means contract in response to the heat and expand when heat is removed from the shape memory alloy means.

## Patentansprüche

1. Vorrichtung zum Zentrieren eines Wandlers über einer Spur auf einer Magnetplatte in einem Plattenlaufwerksystem, mit einem Arm (10), der einen auf einem Stellglied zur Drehung des Armes befestigbaren ersten Endabschnitt (20) und einen zweiten Endabschnitt (18) zur Halterung eines Gleiters aufweist, der den Wandler (24) trägt,
gekennzeichnet durch ein Formgedächtnis aufweisende Legierungseinrichtungen (30, 32), die mit dem Arm gekoppelt sind, und Einrichtungen (31, 33) zum selektiven Erwärmen der ein Formgedächtnis aufweisenden Legierungseinrichtungen, wobei die ein Formgedächtnis aufweisenden Legierungseinrichtungen in Abhängigkeit von der Wärme verformt werden und so angeordnet sind, daß sie eine Auslenkung des Armes hervorrufen, um den Gleiter entlang einer bogenförmigen Bahn in einer Ebene im wesentlichen quer zur Spur zu bewegen.

2. Vorrichtung nach Anspruch 1,
dadurch gekennzeichnet, daß die ein Formgedächtnis aufweisenden Legierungseinrichtungen zumindestens ein erstes, ein Formgedächtnis aufweisendes Legierungselement (30), das mit einer Seite des Armes verbunden ist, wobei eine Verformung des zumindestens einen ersten, ein Formgedächtnis aufweisenden Legierungselementes eine Bewegung des zweiten Endteils des Armes entlang der bogenförmigen Bahn in einer ersten Richtung hervorruft, und zumindestens ein zweites, ein Formgedächtnis aufweisendes Legierungselement (32) umfassen, das mit einer gegenüberliegenden Seite des Armes verbunden ist, wobei eine Verformung des zumindestens einen zweiten, ein Formgedächtnis aufweisenden Legierungselementes eine Bewewgung des zweiten Endteils des Armes entlang der bogenförmigen Bahn in einer zweiten Richtung allgemein entgegengesetzt zur ersten Richtung hervorruft.

3. Vorrichtung nach Anspruch 2,
gekennzeichnet durch mechanische Kopplungseinrichtungen (43, 44), die jedes der ein Formgedächtnis aufweisenden Legierungselemente mit dem Arm derart koppeln, daß zumindestens ein Teil des jeweiligen, ein Formgedächtnis aufweisenden Legierungselementes mit Abstand von dem Arm angeordnet ist.

4. Vorrichtung nach Anspruch 1, 2 oder 3,
dadurch gekennzeichnet, daß die Einrichtungen zum selektiven Erwärmen eine Leistungsversorgung (46), die mit den ein Formgedächtnis aufweisenden Legierungseinrichtungen verbunden ist, und Einrichtungen (44) zur Steuerung der Leistung umfassen, die den ein Formgedächtnis aufweisenden Legierungseinrichtungen zugeführt wird.

5. Vorrichtung nach Anspruch 1, 2 oder 3,
dadurch gekennzeichnet, daß die Einrichtungen zum selektiven Erwärmen eine Vielzahl von Widerstandsheizelementen (31, 33) in thermischen Kontakt mit den ein Formgedächtnis aufweisenden Legierungseinrichtungen, eine mit den Widerstandsheizelementen gekoppelte Leistungsversorgung (46) und Einrichtungen (44) zur Steuerung der Leistung umfassen, die jedem der Widerstandsheizelemente zugeführt wird.

6. Vorrichtung nach einem der Ansprüche 1 bis 5,
dadurch gekennzeichnet, daß der Arm einen Datenarmabschnitt und ein Biegelement (22) umfaßt, das mit dem Datenarmabschnitt zur Halterung des Gleiters gekoppelt ist, und daß die ein Formgedächtnis aufweisende Legierungseinrichtung mit dem Biegelement gekoppelt ist.

7. Vorrichtung nach Anspruch 6,
gekennzeichnet durch ein weiteres Biegeelement 22′, das mit dem Datenarmabschnitt gekoppelt ist, um einen weiteren Gleiter zu haltern, und daß weitere, ein Forgedächtnis aufweisende Legierungseinrichtungen (30′, 32′) mit dem weiteren Biegeelement gekoppelt sind.

8. Vorrichtung nach Anspruch 6 oder 7,
dadurch gekennzeichnet, daß die oder jede ein Formgedächtnis aufweisende Legierungseinrichtung an einem ersten Ende mit dem Datenarmabschnitt und an einem zweiten Ende mit dem oder einem jeweiligen Biegeelement verbunden ist.

9. Vorrichtung nach einem der Ansprüche 1 bis 6,
weiterhin gekennzeichnet durch Positionsanzeigeeinrichtungen (50), die auf auf der Magnetplatte aufgezeichnete Positionsdaten ansprechen, um ein Positionssignal zu liefern, das anzeigt, wenn der Wandler einer Spur gegenüber deren Mittelpunkt versetzt folgt, und eine Wärmesteuereinrichtung (44, 46) zur selektiven Steuerung der Wärmemenge, die den ein Formgedächtnis aufweisenden Legierungseinrichtungen zugeführt wird, als Funktion des Positionssignals.

10. Vorrichtung nach Anspruch 9,
dadurch gekennzeichnet, daß die Wärmesteuereinrichtung Kompensationseinrichtungen (56) zum Kompensation des Positionssignals zur Lieferung eines kompensierten Positionssignals, Korrektureinrichtungen (44) zur Bestimmung eines Korrekturwertes auf der Grundlage des kompensierten Positionssignals, wobei der Korrekturwert die Strecke darstellt, um die der Wandler gegenüber dem Mittelpunkt der Spur versetzt ist, und eine Leistungsversorgung (46) umfaßt, die so ausgebildet ist, daß sie die den Einrichtungen zur selektiven Erwärmung zugeführte Leistung als Funktion des Korrekturwertes ändert.

11. Vorrichtung zur Zentrierung eines Wandlers über einer Spur einer Magnetplatte in einem Plattenlaufwerk-System nach Anspruch 1,
dadurch gekennzeichnet, daß sich die ein Formgedächtnis aufweisenden Legierungseinrichtungen in Abhängigkeit von Wärme zusammenziehen und sich ausdehnen, wenn die Wärme von den ein Formgedächtnis aufweisenden Legierungseinrichtungen entfernt wird.

## Revendications

1. Appareil pour centrer un transducteur sur une piste d'un disque magnétique dans un système de disque, comprenant un bras (10) ayant une première partie d'extrémité (20) susceptible d'être montée sur un actionneur pour entraîner le bras en rotation, et une seconde partie d'extrémité (18) pour supporter un coulisseau portant le transducteur (24), et caractérisé par des moyens en alliage à mémoire de forme (30, 32) couplés au bras, et des moyens (31, 33) pour chauffer sélectivement les moyens en alliage à mémoire de forme, les moyens en alliage à mémoire de forme étant déformés en réponse à la chaleur et agencés de manière à faire dévier le bras pour déplacer le curseur le long d'une trajectoire courbe dans un plan sensiblement perpendiculaire à la piste.

2. Appareil selon la revendication 1, caractérisé en ce que les moyens en alliage à mémoire de forme comprennent au moins un premier élément (30) en alliage à mémoire de forme couplé à un côté du bras, la déformation dudit au moins premier élément en alliage à mémoire de forme causant un déplacement de la seconde partie d'extrémité du bras le long d'une trajectoire courbe dans une première direction, et au moins un second élément en alliage à mémoire de forme (32) couplé à un côté opposé du bras, la déformation dudit au moins second élément en alliage à mémoire de forme causant un déplacement de la seconde partie d'extrémité du bras, le long de la trajectoire courbe, dans une seconde direction sensiblement opposée à la première direction.

3. Appareil selon la revendication 2, caractérisé par des moyens mécaniques de couplage (43, 44), couplant chacun des éléments en alliage à mémoire de forme au bras, de manière qu'au moins une partie de l'élément correspondant en alliage à mémoire de forme soit espacée du bras.

4. Appareil selon l'une des revendications 1, 2 ou 3, caractérisé en ce que les moyens pour chauffer sélectivement comprennent une source d'alimentation (46) couplée aux moyens en alliage à mémoire de forme, et des moyens (44) pour commander l'énergie fournie aux moyens en alliage à mémoire de forme.

5. Appareil selon l'une des revendications 1, 2 ou 3, caractérisé en ce que les moyens pour chauffer sélectivement comprennent une pluralité d'éléments résistifs chauffants (31, 33), en contact thermique avec les moyens en alliage à mémoire de forme, une source d'alimentation (46) couplée aux éléments chauffants résistifs, et des moyens (44) pour commander l'énergie fournie à chacun des éléments chauffants résistifs.

6. Appareil selon l'une quelconque des revendications 1 à 5, caractérisé en ce que le bras comprend une partie de bras de donnée, et un dispositif à flexion (22), couplé à la partie de bras de donnée pour supporter le coulisseau, et en ce que les moyens en alliage à mémoire de forme sont accouplés à ce dispositif de flexion.

7. Appareil selon la revendication 6, caractérisé par un autre dispositif de flexion (22′) couplé à la partie de bras de donnée pour supporter un autre coulisseau, et en ce que d'autres moyens en alliage à mémoire de forme (30′, 32′) sont couplés à l'autre dispositif de flexion.

8. Appareil selon l'une des revendications 6 ou 7, caractérisé en ce que le ou chacun des moyens en alliage à mémoire de forme est couplé à une première extrémité à la partie de bras de donnée et à une seconde extrémité à un dispositif respectif de flexion.

9. Appareil selon l'une quelconque des revendications 1 à 8, caractérisé en outre par des moyens indicateurs de position (50) répondant à des données de position enregistrées sur le disque magnétique pour délivrer un signal de position indiquant si le transducteur ne suit pas le centre de la piste, et des moyens de commande de chauffage (44, 46) pour commander sélectivement la quantité de chaleur appliquée aux moyens en alliage à mémoire de forme en fonction du signal de position.

10. Appareil selon la revendication 9, caractérisé en ce que les moyens de commande de chauffage comprennent des moyens compensateurs (56) pour compenser le signal de position et délivrer un signal de position compensé, des moyens de correction (44) pour déterminer une valeur de correction en fonction du signal de position compensé, dans lequel la valeur de correction représente la distance dont le transducteur est séparé du centre de la piste, et une source d'alimentation (46) construite pour faire varier la puissance délivrée aux moyens de chauffage sélectif en fonction de la valeur de correction.

11. Appareil pour centrer un transducteur sur une piste d'un disque magnétique d'un système de disque selon la revendication 1, caractérisé en ce que les moyens d'alliage à mémoire de forme se contractent en réponse à la chaleur et se dilatent quand la chaleur ne leur est plus appliquée.
